# FASCICULE DE BREVET EUROPEEN

(11) **EP 3 863 927 B1**
(45) Date de publication et mention de la délivrance du brevet: **15.02.2023**
(21) Numéro de dépôt: 19801960.6
(22) Date de dépôt: 04.10.2019
(51) Int. Cl.: B64D 27/24, B64D 41/00, B64D 27/02, H02J 1/08

(54) **RÉSEAU D'ALIMENTATION ÉLECTRIQUE EMBARQUÉ D'UN AÉRONEF À PROPULSION ÉLECTRIQUE**
BORDEIGENES STROMVERSORGUNGSNETZ EINES ELEKTRISCH ANGETRIEBENEN FLUGZEUGS
ON-BOARD POWER SUPPLY NETWORK OF AN ELECTRICALLY PROPELLED AIRCRAFT

(30) Priorité: 09.10.2018 FR 1859351
(43) Date de publication de la demande: 18.08.2021
(73) Titulaire: SAFRAN, 75015 Paris (FR)
(72) Inventeur: SALANNE, Jean-Philippe, Hervé, 77550 MOISSY-CRAMAYEL (FR); PETIBON, Stéphane, 77550 MOISSY-CRAMAYEL (FR); ROUGIER, Florent, 77550 MOISSY-CRAMAYEL (FR); MEUNIER, René, 77550 MOISSY-CRAMAYEL (FR); ABDELLATIF, Meriem, 77550 MOISSY-CRAMAYEL (FR)
(74) Mandataire: Cabinet Beau de Loménie
(86) Numéro de dépôt international: PCT/FR2019/052360
(87) Numéro de publication internationale: WO 2020/074812

(56) Documents cités:
- EP-A1- 3 372 506
- WO-A1-2017/137537
- WO-A1-2018/122297
- US-A1- 2009 302 153
- US-A1- 2015 285 165
- US-B2- 10 017 266

## Description

### Arrière-plan de l'invention

La présente invention concerne le domaine des architectures propulsives à hautes tensions et plus particulièrement un réseau d'alimentation électrique embarqué d'un aéronef. La puissance propulsive électrique est amenée à augmenter avec l'hybridation interne des moteurs des aéronefs, des applications de type BLI (pour Boundary Layer Ingestion) jusqu'à la propulsion électrique totale d'aéronefs de grande taille. Ainsi, le besoin de puissance pour une propulsion électrique d'un tel aéronef (puissance mécanique sur arbre d'une soufflante), qui est maximale au décollage et représente environ 25MW pour un avion civil monocouloir de type SMR (pour Short-Medium Range) est toutefois réduite du 1/3 lors de la montée en altitude puis du 1/4 en phase de croisière.

Cette augmentation de la puissance des réseaux électriques pour assurer les besoins propulsifs va entraîner l'utilisation de tensions plus élevées que celles des réseaux actuels basés essentiellement sur le réseau alternatif 115 VAC/400Hz et le réseau continu 28 VDC, pour atteindre plusieurs milliers de volts (par exemple un réseau DC d'environ 1500V serait envisageable pour un avion de type SMR) et amène de nouveaux défis spécifiques à l'aéronautique, comme la variation de la tenue diélectrique de l'air en fonction de l'altitude (la pression diminue avec l'augmentation de l'altitude).

L'augmentation du niveau de tension liée à l'augmentation des besoins de puissance a en effet de gros impacts sur les réseaux électriques et notamment sur les protections, les reconfigurations du réseau et sur les problématique de décharges partielles.

Ainsi, les protections par disjoncteurs à haute tension et les contacteurs permettant les reconfigurations du réseau sont des équipements généralement volumineux et donc particulièrement lourds car ils nécessitent le recours à une chambre d'expansion pour éteindre l'arc électrique généré lors de l'ouverture du circuit. De plus, les disjoncteurs standards ne sont pas dimensionnés pour fonctionner au-delà d'une altitude d'environ 1500m, ce qui est bien entendu insuffisant au regard des altitudes usuelles en aéronautique y compris en zone pressurisée. Pour pallier cet inconvénient, il est possible de recourir à des disjoncteurs à base de semi-conducteurs, sous réserve d'utiliser deux moyens de protections dissimilaires pour protéger les réseaux, conformément aux spécifications de certifications exigées par les autorités de régulation.

Il en résulte que le risque d'apparition d'arcs électriques non maitrisés ou de décharges partielles est particulièrement augmenté. Or, ces arcs électriques ou décharges partielles localisées peuvent impliquer la destruction partielle ou complète de l'isolant des câbles électriques, des bobinages internes des machines électriques et créer de défaillances ou des contraintes fortes aux niveaux des convertisseurs électriques et des organes de protections.

Le document WO 2018/122297 A1 divulgue un système de propulsion électrique. Le système de propulsion présente des composants électriques qui fonctionnent à des tensions de service comparativement élevées. Afin de compenser les effets négatifs de la loi de Paschen sur la tension de claquage respective en raison de faibles pressions atmosphériques à de grandes hauteurs de vol, une pression atmosphérique est maintenue en des endroits correspondants des composants électriques à l'aide d'un système à pression de gaz, ladite pression atmosphérique correspondant, par exemple, à la pression atmosphérique au niveau de la mer.

### Objet et résumé de l'invention

La présente invention a pour objet de proposer une nouvelle architecture de réseau d'alimentation électrique embarqué d'un aéronef à tension variable permettant de limiter la création d'arcs électriques et de décharges partielles tout en garantissant la prise en compte des besoins de puissance électrique dans les différentes phases de vol de l'aéronef.

Ces buts sont atteints grâce à un système d'alimentation en énergie électrique d'au moins une charge électrique d'un aéronef, ce système comprenant une source principale d'énergie électrique reliée à ladite au moins une charge électrique au travers d'un réseau électrique, le système étant caractérisé en ce qu'il comprend un dispositif de commande relié à ladite source principale d'énergie électrique et configuré pour délivrer un niveau de tension variable sur ledit réseau électrique en fonction d'une loi de variation de tension prédéterminée dépendant d'au moins un paramètre caractérisant l'altitude de l'aéronef et suivant la loi de Paschen avec une marge prédéfinie.

Ainsi l'invention propose une architecture de réseau électrique qui s'adapte à son environnement et notamment lorsque, comme pour les réseaux propulsifs électriques, le besoin en puissance diminue en fonction de l'altitude.

Avantageusement, ladite loi de variation de tension prédéterminée prend en compte également l'un ou plusieurs des paramètres suivants caractérisant : le besoin en puissance, la température, l'état du réseau électrique, l'humidité, la pression, le taux de poussière, des données anticipées de puissance ou d'état du réseau.

Selon le mode de réalisation envisagé, ladite source principale d'énergie électrique peut être un générateur à fréquence variable (VFG) associé à une unité de contrôle (GCU) et ledit dispositif de commande est configuré pour agir sur ladite unité de contrôle afin de délivrer sur ledit réseau électrique un niveau de tension alternatif variable en fonction de ladite loi de variation de tension prédéterminée, ou ladite source principale d'énergie électrique peut être un générateur à aimant permanent (PMG) associé à un redresseur actif (AC/DC) et ledit dispositif de commande est configuré pour agir sur ledit redresseur actif afin de délivrer sur ledit réseau électrique un niveau de tension continu variable en fonction de ladite loi de variation de tension prédéterminée.

L'invention concerne aussi un procédé d'alimentation en énergie électrique d'au moins une charge électrique d'un aéronef, ce procédé comprenant la surveillance d'au moins un paramètre caractérisant l'altitude de l'aéronef, la détermination par un dispositif de commande relié à une source principale d'énergie électrique d'un niveau de tension variable à délivrer sur un réseau électrique alimentant ladite au moins une charge électrique en fonction d'une loi de variation de tension prédéterminée dépendant dudit au moins un paramètre surveillé, et la délivrance depuis ladite source principale d'énergie électrique et via ledit réseau électrique dudit niveau de tension variable déterminé à ladite au moins une charge électrique, ladite loi de variation de tension suivant la loi de Paschen avec une marge prédéfinie.

Selon le mode de réalisation envisagé, ledit niveau de tension variable est un niveau de tension alternatif ou ledit niveau de tension variable un niveau de tension continu.

L'invention concerne également un aéronef comportant un système d'alimentation en énergie électrique d'au moins une charge électrique comme précité.

### Brève description des dessins

D'autres caractéristiques et avantages de la présente invention ressortiront mieux de la description ci-dessous, faite en référence aux dessins annexés qui en illustrent un exemple de réalisation dépourvu de tout caractère limitatif et sur lesquels :
- la figure 1 montre un système d'alimentation en énergie électrique d'au moins une charge électrique d'un aéronef conforme à l'invention,
- la figure 2 illustre différents paramètres permettant l'obtention du signal de commande du système de la figure 1,
- la figure 3 est un exemple de loi de variation de tension mis en oeuvre pour la commande du système d'alimentation de la figure 1,
- la figure 4 montre un exemple de réseau électrique alternatif d'un système d'alimentation en énergie électrique d'au moins une charge électrique d'un aéronef conforme à l'invention,
- la figure 5 montre un exemple de réseau électrique continu d'un système d'alimentation en énergie électrique d'au moins une charge électrique d'un aéronef conforme à l'invention, et
- la figure 6 illustre les différentes étapes du procédé d'alimentation en énergie électrique mis en oeuvre dans le système de la figure 1.

### Description détaillée d'exemples de réalisation

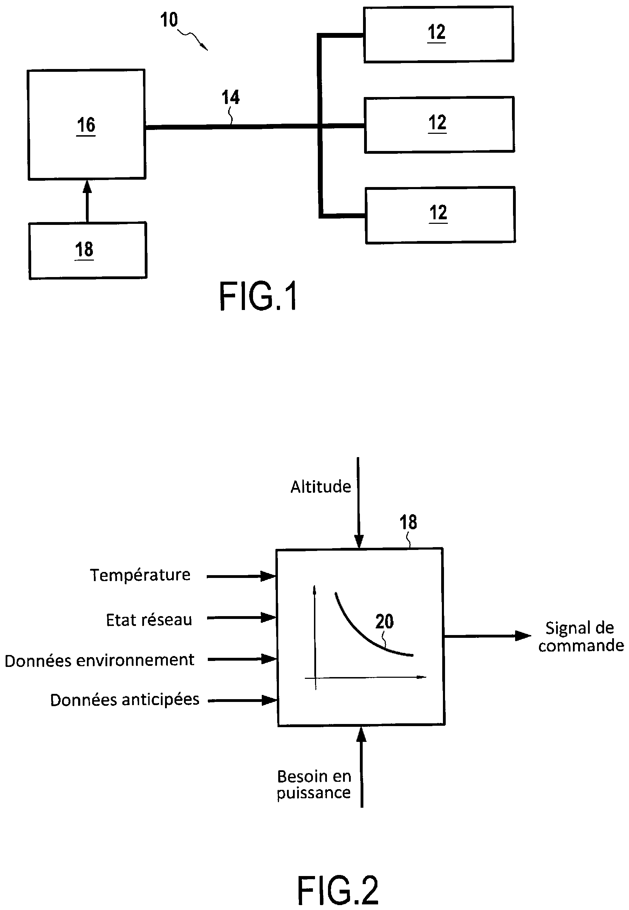

La figure 1 illustre un système d'alimentation 10 en énergie électrique d'au moins une charge électrique 12 d'un aéronef au travers d'un réseau électrique 14 depuis une source principale d'énergie électrique 16. La charge électrique est typiquement une charge électrique propulsive telle qu'un moteur électrique actionnant une soufflante. Elle peut toutefois aussi être une charge non-propulsive telle qu'un APU par exemple.

Selon l'invention, la source principale d'énergie électrique 16 est configurée pour délivrer une tension non plus constante, comme il est connu, mais variable et optimisée d'un point de vue du dimensionnement des différentes charges électriques à alimenter, de sorte à utiliser le réseau électrique 14 toujours au maximum de ses capacités plutôt que de le dimensionner pour une tension fixe prédéterminée. Ainsi, cette source principale délivrera une tension maximale au décollage lorsque la puissance nécessaire est maximale et cette puissance nécessaire diminuant lors de la montée de l'aéronef puis encore en phase de croisière, elle délivrera alors une tension moindre suivant cette décroissance. La tension supportée par les diélectriques présents sur le réseau électrique diminuant avec l'altitude, on veillera toutefois à respecter la tension de claquage de ces diélectriques définie par la loi de Paschen. On rappellera que la loi ou courbe de Paschen qui donne la tension de claquage en fonction du produit distance/pression détermine la limite, en statique, entre la possibilité qu'un arc électrique apparaisse ou non pour une pression donnée entre deux conducteurs séparés dans distance déterminée.

Pour ce faire, il est prévu que le niveau de tension variable délivré par la source principale d'énergie électrique 16 soit commandé par un dispositif de commande 18 relié à cette source principale d'énergie électrique, en fonction d'au moins un paramètre variable nécessaire à la détermination de la tension optimale du réseau électrique 14 de l'aéronef.

La figure 2 montre différents paramètres obligatoires ou optionnels qui sont ou peuvent être utilisés dans le dispositif de commande 18 pour élaborer selon une loi de variation de tension 20 prédéterminée et enregistrée dans le dispositif, un signal de commande permettant d'établir à chaque instant le niveau de tension optimal souhaité sur le réseau électrique. Comme paramètre obligatoire, on retiendra l'altitude et comme autres paramètres facultatifs, le besoin en puissance (la puissance électrique consommée) des charges électriques à alimenter, la température, l'état du réseau électrique ou encore d'autres données permettant d'anticiper cette puissance consommée ou cet état du réseau électrique. Des données plus environnementales, comme la pression, l'humidité, le taux de poussière, etc... sont aussi à envisager pour pouvoir évaluer ce niveau de tension optimal en temps réel.

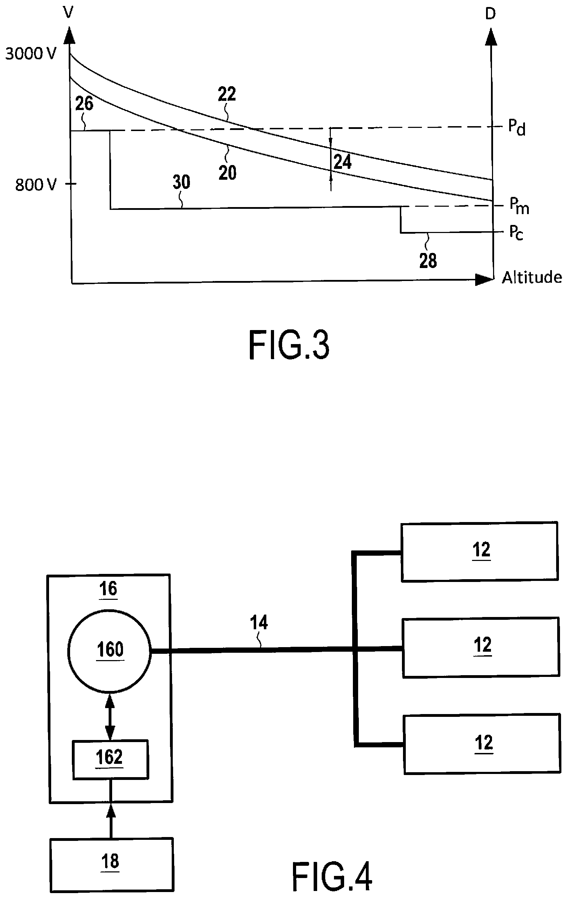

La figure 3 illustre un exemple de réalisation de la loi de variation de tension enregistrée dans le dispositif de commande. Dans cet exemple, le niveau de tension du réseau électrique 20 varie en fonction de la seule altitude de l'aéronef selon la loi (courbe de limitation) de Paschen 22 avec une marge prédéterminée 24 permettant de respecter la limite de la tension de claquage des diélectriques présents sur le réseau électrique de l'aéronef. On vérifiera que cette limitation en fonction de l'altitude est bien compatible avec l'évolution du besoin de puissance de l'aéronef, décrite précédemment, du décollage 26 à la phase de croisière 28 en passant par la montée en altitude 30. A titre d'exemple, pour une distance standard entre conducteurs de 0.6 mm, la loi de Paschen donne des limites de claquage comprises entre 3000 V et 800V pour des altitudes comprises entre le sol et environ 12kmet on notera qu'une marge de 10% est alors appropriée.

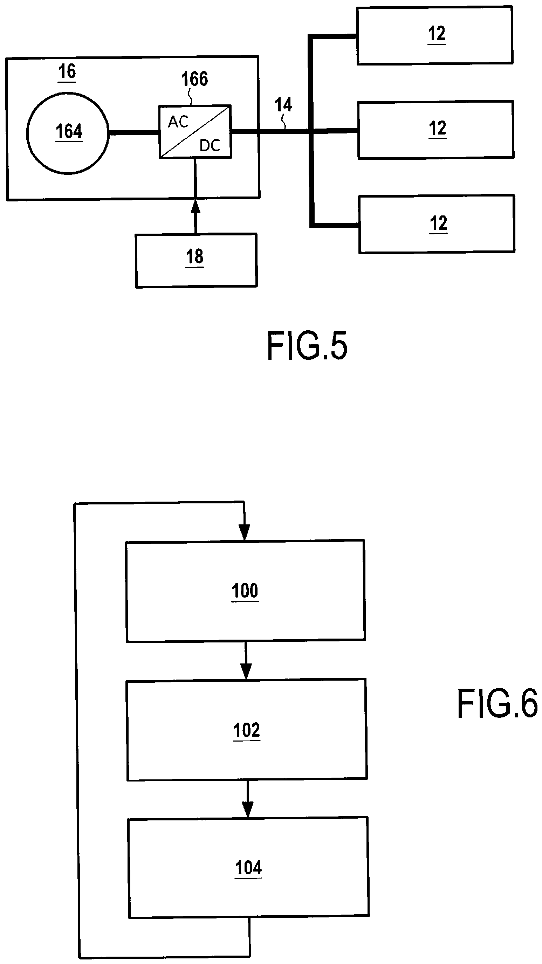

Les figures 4 et 5 présentent deux exemples de réseaux électriques embarqués d'un aéronef mettant en oeuvre l'invention. Bien entendu, d'autres configurations de réseaux électriques utilisant par exemple un ensemble batterie + convertisseur DC/DC, ou batterie + convertisseur DC/AC, ou encore un ensemble pile à combustible + convertisseur est aussi envisageable.

Sur la figure 4, le réseau électrique 14 est un réseau entièrement alternatif (AC) de la source à la charge et la source principale d'énergie électrique 16 est un générateur à fréquence variable 160 (VFG pour Variable Frequency Generator) associé à une unité de contrôle 162 (GCU pour Generator Control Unit). Sur la figure 5, le réseau électrique 14 est un réseau entièrement continu (DC) de la source à la charge et la source principale d'énergie électrique 16 est un générateur à aimant permanent 164 (PMG pour Permanent Magnet Generator) associé à redresseur actif 166 (convertisseur AC/DC). Dans ces deux exemples, le dispositif de commande 18 délivre à l'unité de contrôle 162 ou au redresseur actif 166 le signal de commande qui, selon la loi de variation de tension prédéfinie 20 qu'il incorpore, permettra d'établir le niveau de tension optimal sur le réseau électrique 14 alimentant les charges électriques 12.

La figure 6 illustre de façon simplifiée un exemple du procédé mis en oeuvre dans le dispositif de commande 18. Tout d'abord, il est procédé dans une première étape 100 à la surveillance des paramètres entrant dans la détermination du niveau de tension optimal souhaité. Il s'agit au minimum de la surveillance de l'altitude de l'aéronef mais il peut s'agir aussi de son besoin en puissance ou encore de l'état du réseau électrique comme explicité précédemment. Les différentes valeurs de ces paramètres sont données par différents capteurs connus en soi et disponibles sur l'aéronef. Dans une étape suivante 102, le dispositif de commande appliquant la loi de variation de tension 20 à sa disposition va déterminer le niveau de tension optimal correspondant à la valeur du ou des paramètres obtenus. Lorsque seule l'altitude est relevée, la loi de variation de tension utilisée se réfère à la loi de Paschen dont elle suit l'évolution à une marge de sécurité près. Lorsque d'autres paramètres sont pris en compte, c'est une autre loi de variation de tension prédéterminée qui est utilisée sans toutefois que celle-ci n'excède pour aucune altitude la limite de tension fixée par la loi de variation de tension précédente. Enfin, dans une étape terminale 104, la tension du réseau électrique 14 est régulée autour de ce niveau de tension optimal au travers de l'unité de contrôle 162 ou du redresseur actif 166 de la source principale d'énergie électrique 16 selon le type de réseau AC ou DC mis en oeuvre.

La variabilité du niveau de tension délivré par la source principale d'énergie électrique sous l'action du dispositif de commande procure plusieurs avantages sans modification majeure pour les équipements présents sur le réseau. Notamment, elle peut être utilisée pour assurer la redondance nécessaire aux protections contre les sur-courants. Si la protection faillit, alors on peut annuler le courant dans le circuit en annulant la tension sur le réseau électrique pour permettre d'ouvrir un contacteur redondé (dont le pouvoir de coupure peut être nul). De même, lorsque le nombre de charges propulsives présentes sur le réseau est limité, cette variabilité du niveau de tension peut être utilisée pour effectuer des reconfigurations du réseau électrique à un faible niveau de tension voire à niveau de tension et courant nuis.

## Revendications

1. Système d'alimentation en énergie électrique (10) d'au moins une charge électrique propulsive et/ou non proplusive d'un aéronef, ce système comprenant une source principale d'énergie électrique (16) reliée à ladite au moins une charge électrique (12) au travers d'un réseau électrique (14), le système étant **caractérisé en ce qu'**il comprend un dispositif de commande (18) relié à ladite source principale d'énergie électrique et configuré pour délivrer un niveau de tension variable sur ledit réseau électrique en fonction d'une loi de variation de tension prédéterminée (20) dépendant d'au moins un paramètre caractérisant l'altitude de l'aéronef et suivant la loi de Paschen (22) avec une marge prédéfinie (24).

2. Système selon la revendication 1, dans lequel ladite source principale d'énergie électrique est un générateur à fréquence variable (VFG 160) associé à une unité de contrôle (GCU 162) et ledit dispositif de commande est configuré pour agir sur ladite unité de contrôle afin de délivrer sur ledit réseau électrique un niveau de tension alternatif variable en fonction de ladite loi de variation de tension prédéterminée.

3. Système selon la revendication 1 ou la revendication 2, dans lequel ladite source principale d'énergie électrique est un générateur à aimant permanent (PMG 164) associé à un redresseur actif (AC/DC 166) et ledit dispositif de commande est configuré pour agir sur ledit redresseur actif afin de délivrer sur ledit réseau électrique un niveau de tension continu variable en fonction de ladite loi de variation de tension prédéterminée.

4. Procédé d'alimentation en énergie électrique d'au moins une charge électrique (12) d'un aéronef, ce procédé comprenant la surveillance d'au moins un paramètre caractérisant l'altitude de l'aéronef, la détermination par un dispositif de commande (18) relié à une source principale d'énergie électrique (16) d'un niveau de tension variable à délivrer sur un réseau électrique (14) alimentant ladite au moins une charge électrique en fonction d'une loi de variation de tension (20) prédéterminée dépendant dudit au moins un paramètre surveillé, et la délivrance depuis ladite source principale d'énergie électrique et via ledit réseau électrique dudit niveau de tension variable déterminé à ladite au moins une charge électrique, ladite loi de variation de tension suivant la loi de Paschen (22) avec une marge prédéfinie (24).

5. Procédé selon la revendication 4, dans lequel ledit niveau de tension variable est un niveau de tension alternatif.

6. Procédé selon la revendication 4, dans lequel ledit niveau de tension variable un niveau de tension continu.

7. Procédé selon la revendication 4, dans lequel ladite loi de variation de tension prédéterminée prend en compte également l'un ou plusieurs des paramètres suivants caractérisant : le besoin en puissance, la température, l'état du réseau électrique, l'humidité, la pression, le taux de poussière, des données anticipées de puissance ou d'état du réseau.

8. Aéronef comportant un système d'alimentation en énergie électrique d'au moins une charge électrique selon l'une quelconque des revendications 1 à 3.

## Patentansprüche

1. System (10) zur Versorgung mindestens einer elektrischen Antriebs- und/oder Nichtantriebslast eines Luftfahrzeugs mit elektrischem Strom, wobei dieses System eine Hauptstromquelle (16) umfasst, die über ein Stromnetz (14) mit der mindestens einen elektrischen Last (12) verbunden ist, wobei das System **dadurch gekennzeichnet ist, dass** es eine Steuerungsvorrichtung (18) umfasst, die mit der Hauptstromquelle verbunden ist und dazu ausgestaltet ist, einen variablen Spannungspegel auf dem Stromnetz in Abhängigkeit von einem vorbestimmten Spannungsänderungsgesetz (20) zu liefern, das von mindestens einem Parameter abhängig ist, der die Flughöhe des Luftfahrzeugs kennzeichnet, und dem Paschen-Gesetz (22) mit einem vorbestimmten Spielraum (24) folgt.

2. System nach Anspruch 1, wobei die Hauptstromquelle ein Generator mit variabler Frequenz (VFG 160) ist, der einer Steuereinheit (GCU 162) zugehörig ist, und die Steuervorrichtung dazu ausgestaltet ist, auf die Steuereinheit einzuwirken, um auf dem Stromnetz einen veränderlichen Wechselstrompegel in Abhängigkeit von dem vorbestimmten Spannungsänderungsgesetz zu liefern.

3. System nach Anspruch 1 oder Anspruch 2, wobei die Hauptstromquelle ein Permanentmagnetgenerator (PMG 164) ist, der einem aktiven Gleichrichter (AC/DC 166) zugehörig ist, und die Steuervorrichtung dazu ausgestaltet ist, auf den aktiven Gleichrichter einzuwirken, um auf dem Stromnetz einen variablen Gleichspannungspegel in Abhängigkeit von dem vorbestimmten Spannungsänderungsgesetz zu liefern.

4. System zur Versorgung mindestens einer Stromlast (12) eines Luftfahrzeugs mit elektrischem Strom, wobei dieses Verfahren die Überwachung von mindestens einem Parameter, der die Flughöhe des Luftfahrzeugs kennzeichnet, die Bestimmung eines variablen Spannungspegels, der auf einem Stromnetz (14) zu liefern ist, das die mindestens eine Stromlast versorgt, durch eine Steuervorrichtung (18), die mit einer Hauptstromquelle (16) verbunden ist, in Abhängigkeit von einem vorbestimmten Spannungsänderungsgesetz (20), das von dem mindestens einen überwachten Parameter abhängig ist, und das Liefern des bestimmten variablen Spannungspegels ausgehend von der Hauptstromquelle und über das Stromnetz umfasst, wobei das Spannungsänderungsgesetz dem Paschen-Gesetz (22) mit einem vorbestimmten Spielraum (24) folgt.

5. Verfahren nach Anspruch 4, wobei der variable Spannungspegel ein Wechselspannungspegel ist.

6. Verfahren nach Anspruch 4, wobei der variable Spannungspegel ein Gleichspannungspegel ist.

7. Verfahren nach Anspruch 4, wobei das vorbestimmte Spannungsänderungsgesetz auch einen oder mehrere der folgenden Parameter berücksichtigt, die Folgendes kennzeichnen: den Leistungsbedarf, die Temperatur, den Zustand des Stromnetzes, die Feuchtigkeit, den Druck, den Staubanteil, vorausgesehene Daten über die Leistung oder den Zustand des Netzes.

8. Luftfahrzeug, das ein System zur Versorgung mindestens einer Stromlast mit elektrischem Strom nach einem der Ansprüche 1 bis 3 umfasst.

## Claims

1. System for supplying electrical energy (10) to at least one propulsion and/or non-propulsion electrical load of an aircraft, this system comprising a main source of electrical energy (16) connected to said at least one electrical load ( 12) through an electrical network (14), the system being **characterized in that** it comprises a control device (18) connected to said main source of electrical energy and configured to deliver a variable voltage level on said electrical network based on a predetermined voltage variation law (20) depending on at least one parameter characterizing the altitude of the aircraft and according to the Paschen law (22) with a predefined margin (24).

2. System according to claim 1, wherein said main source of electrical energy is a Variable Frequency Generator (VFG 160) associated with a Generator Control Unit (GCU 162) and said control device is configured to act on said generator control unit in order to deliver on said electrical network a variable AC voltage level based on said predetermined voltage variation law.

3. System according to claim 1 or 2, wherein said main source of electrical energy is a Permanent Magnet Generator (PMG 164) associated with an active rectifier (AC/DC 166) and said control device is configured to act on said active rectifier in order to deliver on said electrical network a variable DC voltage level based on said predetermined voltage variation law.

4. Method for supplying electrical energy to at least one electrical load (12) of an aircraft, this method comprising the monitoring of at least one parameter characterizing the altitude of the aircraft, the determination by a control device ( 18) connected to a main source of electrical energy (16) of a variable voltage level to be delivered on an electrical network (14) supplying said at least one electrical load based on a predetermined voltage variation law (20) depending on said at least one monitored parameter, and the delivery from said main source of electrical energy and via said electrical network of said determined variable voltage level to said at least one electrical load, said voltage variation law following the Paschen law (22) with a predefined margin (24).

5. Method according to claim 4, wherein said variable voltage level is an AC voltage level.

6. Method according to claim 4, wherein said variable voltage level is a DC voltage level.

7. Method according to claim 4, wherein said predetermined voltage variation law also takes into account one or more of the following parameters characterizing: the need for power, the temperature, the state of the electrical network, the humidity, the pressure, the dust level, anticipated power or network state data.

8. Aircraft including a system for supplying electrical energy to at least one electrical load according to any one of the claims 1 à 3.
